(19) Europäisches Patentamt
European Patent Office
Office européen des brevets

(11) **EP 3 387 797 B1**

(12) **EUROPÄISCHE PATENTSCHRIFT**

(45) Veröffentlichungstag und Bekanntmachung des Hinweises auf die Patenterteilung:
**23.10.2019 Patentblatt 2019/43**

(21) Anmeldenummer: **16808602.3**

(22) Anmeldetag: **06.12.2016**

(51) Int Cl.:
***H04L 12/40*** *(2006.01)*

(86) Internationale Anmeldenummer:
**PCT/EP2016/079823**

(87) Internationale Veröffentlichungsnummer:
**WO 2017/097731 (15.06.2017 Gazette 2017/24)**

(54) **BUSANORDNUNG MIT EINEM TEILNEHMER MIT MODULEN UND VERFAHREN ZUM BETREIBEN EINER BUSANORDNUNG**

BUS ARRANGEMENT WITH A SUBSCRIBER WITH MODULES AND METHOD FOR OPERATING A BUS ARRANGEMENT

SYSTÈME DE BUS COMPRENANT UN ABONNÉ DISPOSANT DE MODULES ET PROCÉDÉ DE FONCTIONNEMENT D'UN SYSTÈME DE BUS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.12.2015 DE 102015121290**

(43) Veröffentlichungstag der Anmeldung:
**17.10.2018 Patentblatt 2018/42**

(73) Patentinhaber: **Eaton Intelligent Power Limited Dublin 4 (IE)**

(72) Erfinder:
• **HANSING, Matthias**
  **53604 Bad Honnef (DE)**

• **HELLER, Franz**
  **53757 Sankt Augustin (DE)**
• **THIESSMEIER, Peter**
  **53343 Wachtberg (DE)**

(74) Vertreter: **Eaton IP Group**
**EMEA**
**c/o Eaton Industries Manufacturing GmbH**
**Route de la Longeraie 7**
**1110 Morges (CH)**

(56) Entgegenhaltungen:
**US-A1- 2010 146 182     US-A1- 2015 143 008**
**US-A1- 2015 169 493     US-A1- 2015 331 413**

**Beschreibung**

Die vorliegende Erfindung betrifft eine Busanordnung mit einem Teilnehmer mit Modulen und ein Verfahren zum Betreiben einer Busanordnung.

Eine Busanordnung kann beispielsweise in der Automatisierungstechnik eingesetzt werden. Eine Busanordnung weist typisch einen Koordinator und mehrere Teilnehmer auf. Ein Bus verbindet die Teilnehmer mit dem Koordinator. Die Teilnehmer können als Aktoren oder Sensoren realisiert sein. Die Aktoren können Schaltgeräte wie Schütze, Motorstarter und Leistungsschalter, Befehlsgeräte und Frequenzumrichter sein.

Dokument US 2015/0169493 A1 beschreibt eine Feldeinheit und ein Verfahren zum Betreiben eines Automatisierungssystems. Das Automatisierungssystem umfasst eine Steuereinrichtung, die für eine Koordination einer oder mehrerer Feldeinheiten vorgesehen ist. Eine Feldeinheit umfasst einen Busknoten und mehrere mit dem Busknoten gekoppelte Funktionsmodule. Zwischen der Steuereinrichtung und der Feldeinheit ist ein externes elektrisches Kommunikationssystem vorgesehen, das als Feldbus ausgebildet ist. Für eine Übertragung von elektrischen Signalen zwischen dem Busknoten und den Funktionsmodulen ist ein internes elektrisches Kommunikationssystem, insbesondere ein Kommunikationsbus, vorgesehen. Dabei dient der Busknoten zur Signalumsetzung zwischen einem externen Feldbusprotokoll und einem internen Kommunikationsbusprotokoll und ermöglicht somit einen Datenaustausch zwischen einem Funktionsmodul und der Steuereinrichtung.

Eine Aufgabe der vorliegenden Erfindung ist es, eine Busanordnung und ein Verfahren zum Betreiben einer Busanordnung bereitzustellen, bei denen ein Modul eines Teilnehmers angesprochen werden kann.

Die Aufgabe wird mit den Gegenständen der unabhängigen Patentansprüche gelöst. Weiterbildungen und Ausgestaltungen sind jeweils Gegenstand der abhängigen Ansprüche.

In einer Ausführungsform umfasst eine Busanordnung einen ersten Teilnehmer, der ein Basismodul und eine erste Anzahl N von Modulen umfasst, einen zweiten Busteilnehmer, einen Koordinator, der einen ersten und einen zweiten Busanschluss umfasst, und einen Bus, der den ersten Busanschluss mit dem ersten und dem zweiten Teilnehmer koppelt. Der Bus kann als linearer Bus realisiert sein. Dabei ist der Koordinator ausgelegt, ein Feldbus-Telegramm über den zweiten Busanschluss zu empfangen und in ein an das Basismodul oder ein Modul aus der ersten Anzahl N von Modulen gerichtetes Bustelegramm umzuwandeln und über den ersten Busanschluss zu senden.

Mit Vorteil ist das Bustelegramm an das Modul oder das Basismodul adressiert. Der Koordinator bestimmt unter Verwendung der Informationen im Feldbus-Telegramm, an welchen Teilnehmer und welches Modul oder Basismodul des Teilnehmers das Bustelegramm zu adressieren ist. Die erste Anzahl N ist größer null.

In einer Ausführungsform ist jedes Modul der ersten Anzahl N von Modulen adressierbar. An jedes Modul der ersten Anzahl von Modulen kann der Koordinator ein Bustelegramm richten. Der Koordinator kann das Bustelegramm wahlweise an das Basismodul oder ein Modul aus der ersten Anzahl N von Modulen richten. Der Koordinator kann das Bustelegramm wahlweise auch an den zweiten oder einen weiteren Teilnehmer richten.

In einer Ausführungsform weist der erste Teilnehmer eine erste Teilnehmeradresse auf. Der zweite Teilnehmer weist eine zweite Teilnehmeradresse auf. Die erste Anzahl N von Modulen weist eine erste Anzahl N von Modulnummern auf. Das Basismodul kann ebenfalls eine Modulnummer aufweisen. Der Koordinator umfasst einen Speicher. Der Speicher kann nicht-flüchtig sein. Der Koordinator identifiziert aus dem Feldbus-Telegramm eine Slot-Nummer, ermittelt unter Verwendung der Slot-Nummer und der im Speicher gespeicherten Informationen die erste Teilnehmeradresse und die der Slot-Nummer dazugehörige Modulnummer sowie adressiert das Bustelegramm an die erste Teilnehmeradresse und die Modulnummer. Mit Vorteil kann das Feldbus-Telegramm frei von der Angabe einer Modulnummer sein. Das Feldbus-Telegramm kann ausschließlich Slot-Nummern zur Adressierung von Teilnehmern, Basismodulen und Modulen enthalten.

In einer Ausführungsform gibt der Koordinator ein Feldbus-Telegramm über den zweiten Busanschluss ab, welches eine Slot-Nummer und von einem Modul aus der Anzahl N von Modulen oder dem Basismodul des ersten Teilnehmers bereitgestellte Daten umfasst. Der Koordinator ermittelt die im Feldbus-Telegramm angegebene Slot-Nummer unter Verwendung der im Speicher gespeicherten Informationen, der ersten Teilnehmeradresse sowie der zur Slot-Nummer dazugehörenden Modulnummer des Moduls oder des Basismoduls.

Der Koordinator kann als Übergabestelle, englisch Gateway, implementiert sein.

In einer Ausführungsform sendet der Koordinator in einem Konfigurationsmodus dem ersten Teilnehmer ein Bustelegramm zum Abfragen von Informationen und der erste Teilnehmer übermittelt die erste Anzahl N, das heißt den Zahlenwert der ersten Anzahl N, dem Koordinator. Der erste Teilnehmer kann einen ersten nicht-flüchtigen Speicher umfassen, in dem die erste Anzahl N gespeichert ist. Der erste Teilnehmer stellt den im ersten nicht-flüchtigen Speicher gespeicherten Wert der ersten Anzahl N dem Koordinator bereit.

In einer Ausführungsform umfasst ein Modul der ersten Anzahl von Modulen jeweils eine konfigurierbare und/oder parametrisierbare Funktionseinheit oder ist als solche realisiert. Der erste Teilnehmer umfasst somit die erste Anzahl N von konfigurierbaren und/oder parametrisierbaren Funktionseinheiten. Der zweite Teilnehmer kann ebenfalls eine konfigurierbare und/oder parametrisierbare Funktionseinheit umfassen.

In einer Ausführungsform umfasst das Basismodul eine konfigurierbare und/oder parametrisierbare Funktionseinheit oder ist als solche realisiert. Der erste Teilnehmer umfasst somit N + 1 Funktionseinheiten.

In einer Ausführungsform ist eine Funktionseinheit als eine Baueinheit oder ein Programmbaustein oder beides realisiert. Die Baueinheit kann eine physikalische Baueinheit sein, die mit weiteren Baueinheiten mechanisch und elektrisch verbunden wird, um den ersten Teilnehmer zu realisieren. Der erste Teilnehmer kann einen Prozessorkern aufweisen, in dem mehrere Programmbausteine ablaufen. Die verschiedenen Programmbausteine haben unterschiedliche Aufgaben, die voneinander unabhängig sein können.

In einer Ausführungsform umfasst eine Funktionseinheit eine Baueinheit und einen Programmbaustein, der die Baueinheit steuert oder Daten der Baueinheit speichert.

In einer Ausführungsform umfasst ein Modul der ersten Anzahl von Modulen jeweils eine Funktionseinheit aus einer Gruppe, die eine Aktor-, Schaltgeräts-, Stellgeräts-, Befehlsgeräts-, Meldegeräts-, Bediengeräts-, Frequenzumrichter-, Messgeräts- und Sensor-Einheit enthält. Eine Schaltgeräts-Einheit kann z.B. als Schütz-, Motorstarter- oder Leistungsschalter-Einheit realisiert sein.

In einer Ausführungsform umfasst das Basismodul eine Funktionseinheit aus einer Gruppe, die eine Aktor-, Schaltgeräts-, Stellgeräts-, Befehlsgeräts-, Meldegeräts-, Bediengeräts-, Frequenzumrichter-, Messgeräts- und Sensor-Einheit enthält. Eine Schaltgeräts-Einheit kann z.B. als Schütz-, Motorstarter-oder Leistungsschalter-Einheit realisiert sein. Der erste Teilnehmer umfasst die erste Anzahl N zuzüglich 1 von Funktionseinheiten aus dieser Gruppe. Der zweite Teilnehmer kann ebenfalls eine Funktionseinheit aus der oben angegebenen Gruppe umfassen.

In einer Ausführungsform umfasst das Basismodul eine Funktionseinheit aus einer Gruppe, die eine Aktor-, Schaltgeräts-, Stellgeräts-, Befehlsgeräts-, Meldegeräts-, Bediengeräts-, Frequenzumrichter-, Messgeräts- und Sensor-Einheit enthält. Eine Schaltgeräts-Einheit kann z.B. als Schütz-, Motorstarter-oder Leistungsschalter-Einheit realisiert sein.

In einer Ausführungsform ist das Basismodul des ersten Teilnehmers direkt an den Bus angeschlossen. Die Module der ersten Anzahl von Modulen des ersten Teilnehmers sind frei von einem direkten Anschluss an den Bus. Die Kommunikation des Koordinators mit den Modulen der ersten Anzahl N von Modulen erfolgt ausschließlich über das direkt an den Bus angeschlossene Basismodul des ersten Teilnehmers.

In einer Ausführungsform teilt der Koordinator in einer Konfigurationsphase dem ersten Teilnehmer eine erste Teilnehmeradresse mit. Der Koordinator kann in der Konfigurationsphase dem zweiten Teilnehmer eine zweite Teilnehmeradresse mitteilen.

In einer Ausführungsform ist der erste Teilnehmer zwischen dem Koordinator und dem zweiten Teilnehmer am Bus angeordnet. Der zweite Teilnehmer kann nachfolgend zum ersten Teilnehmer am Bus angeschlossen sein.

In einer Ausführungsform ermittelt der Koordinator die zweite Teilnehmeradresse gemäß folgender Vorschrift:

$$\text{zweite Teilnehmeradresse} \geq \text{erste Teilnehmeradresse} + N + 1,$$

wobei N die erste Anzahl der Module des ersten Teilnehmers ist.

In einer Ausführungsform sind der ersten Anzahl N von Modulen die erste Anzahl N von Slot-Nummern zugeordnet. Ebenso kann dem Basismodul eine Slot-Nummer zugeordnet sein. Die Zuordnung der Module und des Basismoduls zu den Slot-Nummern ist im Speicher des Koordinators gespeichert. Der Speicher kann nicht-flüchtig sein. Die Slot-Nummern sind aufeinanderfolgende ganze Zahlen. Dem zweiten Teilnehmer wird die Slot-Nummer zugeordnet, die unmittelbar auf die höchste Slot-Nummer der ersten Anzahl N von Modulen folgt, oder eine höhere Slot-Nummer.

In einer Ausführungsform ist die Teilnehmeradresse des zweiten Teilnehmers identisch mit der ihm entsprechenden Slot-Nummer. Dies erleichtert die Programmierung der Steuerung.

In einer Ausführungsform belegen die Teilnehmeradressen nicht alle aufeinanderfolgende Zahlen. Der Koordinator verwendet N-1 Werte zwischen der ersten und der zweiten Teilnehmeradresse nicht.

In einer Ausführungsform umfasst der Bus eine erste Signalleitung, die den ersten Teilnehmer und den Koordinator koppelt, und mindestens eine Busleitung, die den Koordinator mit dem ersten und dem zweiten Teilnehmer verbindet. Der Koordinator aktiviert in der Konfigurationsphase über die erste Signalleitung den ersten Teilnehmer und sendet über die mindestens eine Busleitung ein Bustelegramm, das die erste Teilnehmeradresse enthält, ab. Der erste Teilnehmer speichert die erste Teilnehmeradresse in einem ersten flüchtigen Speicher des ersten Teilnehmers. Dadurch, dass genau ein Teilnehmer aktiviert ist, nämlich in diesem Fall der erste Teilnehmer, speichert ausschließlich dieser Teilnehmer die über die mindestens eine Busleitung bereitgestellte Teilnehmeradresse. Ein derartiges über die Busleitung an alle Teilnehmer abgesandtes Bustelegramm kann auch als Broadcast-Nachricht bezeichnet werden. Da der erste Teilnehmer die erste Teilnehmeradresse nun im ersten flüchtigen Speicher speichert, kann er mittels der ersten Teilnehmeradresse adressiert werden. Die Aktivierung des ersten Teilnehmers kann direkt vom Koordinator erfolgen oder, falls weitere Teilnehmer zwischen dem Koordinator und dem ersten Teilnehmer angeordnet sind, über den dem ersten Teilnehmer vorangehenden Teilnehmer.

In einer Ausführungsform umfasst der Bus eine zweite Signalleitung, die den zweiten Teilnehmer an den ersten Teilnehmer anschließt. Die mindestens eine Busleitung verbindet den Koordinator mit dem ersten und dem zweiten Teilnehmer.

In einer Ausführungsform aktiviert der erste Teilnehmer in der Konfigurationsphase über die zweite Signalleitung den zweiten Teilnehmer. Der Koordinator sendet über die mindestens eine Busleitung ein Bustelegramm, das die zweite Teilnehmeradresse enthält, an den ersten und den zweiten Teilnehmer ab. Der zweite Teilnehmer speichert die zweite Teilnehmeradresse in einem zweiten flüchtigen Speicher des zweiten Teilnehmers. Da im Zeitraum, in dem das Bustelegramm mit der zweiten Teilnehmeradresse gesendet wird, nur der zweite Teilnehmer aktiviert ist, übernimmt ausschließlich der zweite Teilnehmer die zweite Teilnehmeradresse in seinen flüchtigen Speicher.

Der erste und der zweite flüchtige Speicher des ersten und des zweiten Teilnehmers können beispielsweise als Random Access Memory, abgekürzt RAM, oder Flash-Speicher implementiert sein. Das RAM kann etwa als Dynamic Random Access Memory, abgekürzt DRAM, oder Static Random Access Memory, abgekürzt SRAM, realisiert sein. Der erste und der zweite flüchtige Speicher sind ausgelegt, in der Ausschaltphase ihren Speicherinhalt zu verlieren.

Der zweite Teilnehmer kann ausschließlich aus einem Basismodul bestehen.

In einer Ausführungsform weist der zweite Teilnehmer einen zweiten nicht-flüchtigen Speicher auf, in dem eine zweite Anzahl M von Modulen gespeichert ist. Besteht der zweite Teilnehmer ausschließlich aus dem Basismodul, so hat die zweite Anzahl M den Wert 0. Der erste und der zweite nicht-flüchtige Speicher können z.B. permanente Speicher wie etwa ein Read Only Memory, abgekürzt ROM, ein Programmable Read Only Memory, abgekürzt PROM, oder ein One Time Programmable Baustein, kurz OTP Baustein, sein.

In einer Ausführungsform ist der Speicher des Koordinators nicht-flüchtig. Der Speicher speichert die erste Anzahl N und gegebenenfalls die zweite Anzahl M remanent. Somit ist der Speicher des Koordinators ausgelegt, auch bei einer Unterbrechung einer Stromversorgung des Koordinators die erste Anzahl N und gegebenenfalls die zweite Anzahl M weiter zu speichern. Der Speicher kann ein semi-permanenter Speicher wie etwa ein Electrically Erasable Programmable Read Only Memory, abgekürzt EEPROM, oder ein Flash-EEPROM sein. Der Koordinator kann einen weiteren Speicher, der flüchtig ist, aufweisen.

In einer Ausführungsform schließt die erste Signalleitung den ersten Teilnehmer an den Koordinator an. Der erste Teilnehmer und der Koordinator sind somit direkt und permanent über die erste Signalleitung aneinander angeschlossen.

In einer Ausführungsform ist der zweite Teilnehmer direkt und permanent über die zweite Signalleitung an den ersten Teilnehmer angeschlossen. Der zweite Teilnehmer ist nicht direkt an die erste Signalleitung angeschlossen. Der zweite Teilnehmer ist ausschließlich über den ersten Teilnehmer mit der ersten Signalleitung gekoppelt. Entsprechend ist der Koordinator nicht direkt an die zweite Signalleitung angeschlossen. Der Koordinator ist über den ersten Teilnehmer mit der zweiten Signalleitung gekoppelt.

An die mindestens eine Busleitung ist sowohl der Koordinator wie auch der erste Teilnehmer als auch der zweite Teilnehmer direkt angeschlossen.

In einer Ausführungsform ist die mindestens eine Busleitung des Busses als genau eine Busleitung realisiert.

In einer alternativen Ausführungsform weist der Bus die mindestens eine Busleitung sowie eine weitere Busleitung auf. Somit weist der Bus genau zwei Busleitungen, nämlich eine erste und eine zweite Busleitung, auf. Die erste und die zweite Busleitung können gemäß dem Schnittstellen-Standard TIA/EIA-485 A, auch EIA-485 oder RS-485 bezeichnet, betrieben werden.

In einer Ausführungsform umfasst die Busanordnung einen oder mehrere weitere Teilnehmer, die an die mindestens eine Busleitung angeschlossen sind. Ein weiterer Teilnehmer kann über eine dritte Signalleitung an den zweiten Teilnehmer angeschlossen sein. Der oder die weiteren Teilnehmer können jedoch auch beispielsweise zwischen dem Koordinator und dem ersten Teilnehmer angeordnet sein.

In einer Ausführungsform ist die Konfigurationsphase Teil einer Betriebsphase. Auf die Betriebsphase folgen eine Ausschaltphase und dann eine weitere Betriebsphase, welche mit einer Wiederanlaufphase beginnt. Im weiteren Verlauf können sich weitere Betriebsphasen, die jeweils zu Anfang eine Wiederanlaufphase aufweisen, und Ausschaltphasen abwechseln. Somit folgt die Wiederanlaufphase der Konfigurationsphase.

In einer Ausführungsform bilden der Koordinator und die Teilnehmer eine Reihenschaltung oder Kette, die als Daisy-Chain bezeichnet werden kann. Somit bilden der Koordinator und die Teilnehmer eine Daisy-Chain-Anordnung oder einen Daisy-Chain-Bus. Der Koordinator und die Teilnehmer sind seriell über die Signalleitungen verbunden. Der erste Teilnehmer kann direkt an den Koordinator angeschlossen sein. Die weiteren Teilnehmer sind jeweils an ihre Vorgänger angeschlossen.

In einer Ausführungsform umfasst das Basismodul des ersten Teilnehmers einen Transceiver. Der Transceiver ist mit dem ersten flüchtigen Speicher und dem ersten nicht-flüchtigen Speicher des ersten Teilnehmers gekoppelt. Die Module der ersten Anzahl N von Modulen des ersten Teilnehmers sind frei von einem Transceiver. Weiter kann der zweite Teilnehmer einen Transceiver umfassen, welcher mit dem zweiten flüchtigen Speicher und dem zweiten nicht-flüchtigen Speicher gekoppelt sein kann. Die Transceiver können als Bus-Transceiver realisiert sein. Die Transceiver können für den Schnittstellen-Standard RS-485 ausgelegt sein.

In einer Ausführungsform sendet der Koordinator in einer Betriebsphase, etwa nach der Konfigurationsphase oder nach der Wiederanlaufphase, über die mindestens eine Busleitung ein Bustelegramm, das die erste Teilnehmeradresse sowie Daten enthält, an alle Teilnehmer und somit auch an den ersten und den zweiten Teilnehmer. Der Transceiver des ersten Teilnehmers ist ausgelegt, die erste Teilnehmeradresse und die Modulnummer zu erkennen, sodass das Modul oder das Basismodul des ersten Teilnehmers mit der gesandten Modulnummer die Daten im Bustelegramm verarbeitet oder entsprechend der Daten eingestellt wird. Der zweite und die weiteren Teilnehmer können die zweite Teilnehmeradresse beziehungsweise die weiteren Teilnehmeradressen erkennen, sodass der zweite beziehungsweise weitere Teilnehmer die Daten im Bustelegramm verarbeiten.

Die Busanordnung kann auch Bussystem bezeichnet werden. Die Busanordnung kann ein Adressierungsverfahren über Daisy-Chain durchführen. Dabei steht die Daisy-Chain für die geographische Position. Bei jeder ersten Inbetriebnahme der Busanordnung wird ein Verfahren über Daisy-Chain verwendet. Alle Teilnehmer am Bus werden vom Koordinator mit aufsteigender Adressfolge adressiert. Das Adressierungsverfahren endet am ersten fehlenden Teilnehmer bzw. am letztmöglich zu adressierenden Teilnehmer. Die Anzahl der Module eines jeden adressierten Teilnehmers wird zusammen mit seiner Teilnehmeradresse beim Koordinator remanent gespeichert.

In einer Ausführungsform umfasst ein Verfahren zum Betreiben einer Busanordnung folgende Schritte: Der Koordinator empfängt ein Feldbus-Telegramm über einen zweiten Busanschluss der Koordinators. Der Koordinator wandelt das Feldbus-Telegramm in ein Bustelegramm um und sendet es über einen ersten Busanschluss des Koordinators. Dabei koppelt ein Bus den ersten Busanschluss mit einem ersten und einem zweiten Teilnehmer. Der erste Teilnehmer umfasst ein Basismodul und eine erste Anzahl N von Modulen. Der Koordinator richtet das Bustelegramm an ein Modul aus der ersten Anzahl N von Modulen oder das Basismodul.

Da der Koordinator das Bustelegramm an das Modul aus der ersten Anzahl N von Modulen adressieren kann, ist eine Übermittlung von Daten und/oder Befehlen aus dem Feldbus-Telegramm an das Modul möglich. Die erste Anzahl N ist größer null. Die erste Anzahl kann auch größer eins oder zwei sein.

Mit Vorteil können mehrere Funktionen mit einem Teilnehmer umgesetzt werden, wobei jede einzelne Funktion in der Steuerungswelt wieder eine eindeutige Zuordnung in der Abbildadresse erhält. Der erste, zweite und weitere Teilnehmer können auch als Bus-Teilnehmer bezeichnet werden.

Der erste Teilnehmer ist als modularer Bus-Teilnehmer realisiert. Die Sub-Funktionen des modularen Bus-Teilnehmers werden in der Steuerungsebene wieder als Bus-Teilnehmer-Funktionen abgebildet.

Der Koordinator ist als Feldbus-Gateway ausgebildet. Der Bus kann auch als Subbus bezeichnet werden. Der Koordinator ist ein modularer Feldbus-Teilnehmer, der einen Busstrang mit seinen Teilnehmern repräsentieren kann. Bus-Teilnehmer-Adressen werden auf dem Feldbus als Slot-Nummern eines modularen Feldbus-Teilnehmers abgebildet. Weitere Sub-Adressierungsebenen können bei den meisten Feldbussen nicht mehr einfach transparent abgebildet werden. Ein modularer Bus-Teilnehmer benötigt aber genau diese weitere Sub-Ebene. Daher wird im als Feldbus-Gateway implementierten Koordinator die Feldbus-Slot-Adressierung des Feldbus-Teilnehmers aus der Steuerungsebene oder Feldbusebene für die Submodule eines modularen Bus-Teilnehmers in eine Bus-Slot-Adressierung übersetzt, damit diese Subbus-Module auf Steuerungsebene transparent wie Bus-Teilnehmer-Module bearbeitet werden können.

Slot-Nummern im modularen Feldbus-Teilnehmer werden zu Subbus-Teilnehmeradressen und eventuell zu Slot-Nummern eines Subbusteilnehmers und umgekehrt

Feldbus-Teilnehmeradressen werden auf dem Subbus als Slot-Nummern (Submodule) eines modularen Subbus-Teilnehmers abgebildet.

Submodule werden bei der Parametrierung/Konfigurierung wie normale Subbus-Teilnehmer behandelt.

Der Koordinator hat die Funktion eines Gateways zwischen dem Feldbus und dem Bus. In der Sollkonfiguration des Koordinators werden für die Subbus Submodule jeweils die projektierten Parameter- und Konfigurations-Daten wie für einen Subbus Standard Teilnehmer behandelt und remanent gespeichert.

Subbus Adressen entsprechen Feldbus Slot-Nummern eines modularen Feldbus-Teilnehmers. Die Subbus Slot-Nummer wird bei modularen Subbus-Teilnehmern aus der Subbus Adresse plus der Subbus Slot-Nummer, etwa der Modulnummer, berechnet. Jedes Subbus-Teilnehmer-Modul wird auf Feldbusebene als Bus-Teilnehmer-Slot abgebildet. Für jedes Subbus-Teilnehmer-Modul werden Anlauf-Parameter, Anlauf-Konfigurationsdaten, Diagnosen und sonstiger azyklischer Datenaustausch jeweils separat übertragen. Im Subbus Protokoll ermöglichen alle azyklischen Protocol Data Units, abgekürzt PDUs, eine Modul-Adressierung über Slot-Nummern. Mit der Anzahl der vorhandenen Module im modularen Subbus-Teilnehmer verschiebt sich die Adresse des Folgeteilnehmers am Subbus, damit die Abbildung aller Teilnehmer und Slot-Module auf Feldbusebene möglich ist. Die maximale Anzahl der zulässigen Subbus-Teilnehmer reduziert sich implizit mit der Summe aller Module. Dies hat auch den weiteren Vorteil, dass vorhandenen Ressourcen in den Feldbus-Gateways, die Subbus-Module unterstützen, gleich bleiben.

Die Abbildung eines modularen Teilnehmers kann wie folgt durchgeführt werden: Der Koordinator, der als Feldbus-Gateway funktioniert, mit seinen Teilnehmern ist ein modularer Feldbus-Teilnehmer, deren Submodule jeweils Teilnehmer sind. Teilnehmeradressen werden als Slot-Nummern im Feldbus-Teilnehmer abgebildet. Die Submodule eines modularen Teilnehmers (zweite Subebene) werden für den Feldbus wie Teilnehmer abgebildet. Diese Abbildung wird im Koordinator umgesetzt.

Eine Gateway-Erweiterung kann derart implementiert werden: Der Koordinator muss den modularen Teilnehmer erkennen und wissen, wie viele Slots er hat. Die Prozessdatenlängen für jeden Slot müssen ebenfalls bekannt sein, damit das Statusnibble/byte gebildet werden kann (z.B. Diagnose). Teilnehmeradressen entsprechen Feldbus-Slot-Nummern eines modularen Feldbus-Teilnehmers. Die Feldbus-Slot-Nummer wird bei modularen Teilnehmern aus der Teilnehmeradresse plus der Teilnehmer-Slot-Nummer, das heißt der Modulnummer, errechnet.

Die Erfindung wird im Folgenden an mehreren Ausführungsbeispielen anhand der Figuren näher erläutert. Funktions- beziehungsweise wirkungsgleiche Komponenten oder Funktionseinheiten tragen gleiche Bezugszeichen. Insoweit sich Komponenten oder Funktionseinheiten in ihrer Funktion entsprechen, wird deren Beschreibung nicht in jeder der folgenden Figuren wiederholt. Es zeigen:

Figuren 1 und 2        zwei beispielhafte Ausführungsformen einer Busanordnung,

Figuren 3A und 3B      beispielhafte Ausführungsformen von Zuordnungstabellen und

Figur 4                eine beispielhafte Abfolge von Phasen in einer Busanordnung.

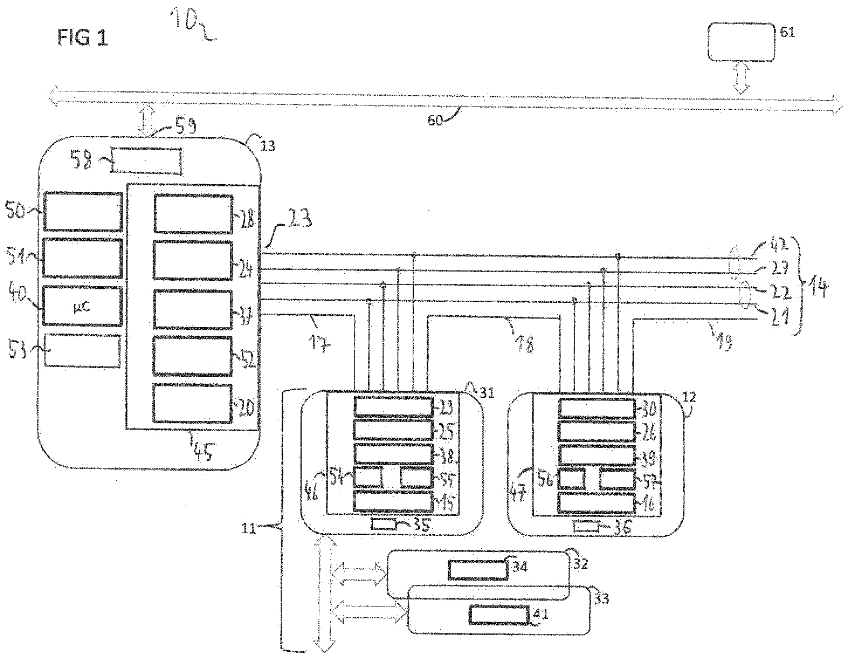

Figur 1 zeigt eine beispielhafte Ausführungsform einer Busanordnung 10, die einen ersten und einen zweiten Teilnehmer 11, 12, einen Koordinator 13 und einen Bus 14 umfasst. Der Koordinator 13 ist mit dem ersten und dem zweiten Teilnehmer 11, 12 über einen ersten Busanschluss 23 des Busses 14 verbunden. Der erste und der zweite Teilnehmer 11, 12 weisen jeweils einen Prozessorkern 15, 16 auf. Der Bus 14 umfasst eine erste Signalleitung 17, die einen Anschluss des Koordinators 13 mit einem Anschluss des ersten Teilnehmers 11 und damit beispielsweise mit einem Anschluss des Prozessorkerns 15 des ersten Teilnehmers 11 verbindet. Die erste Signalleitung 17 ist nicht direkt an den zweiten oder einen weiteren Teilnehmer 12 angeschlossen. Aus Gründen der Übersichtlichkeit sind die Leitungen im Koordinator 13 und im ersten und zweiten Teilnehmer 11, 12 nicht eingezeichnet.

Weiter umfasst der Bus 14 eine zweite Signalleitung 18, die einen Anschluss des ersten Teilnehmers 11 an einen Anschluss des zweiten Teilnehmers 12 anschließt. Beispielsweise verbindet die zweite Signalleitung 18 den Prozessorkern 15 des ersten Teilnehmers 11 mit dem Prozessorkern 16 des zweiten Teilnehmers 12. Zusätzlich kann der Bus 14 eine dritte Signalleitung 19 umfassen, die einen Anschluss des zweiten Teilnehmers 12 mit einem nicht gezeigten dritten Teilnehmer verbindet. Der Koordinator 13 umfasst einen Prozessorkern 20, der an die erste Signalleitung 17 angeschlossen ist. Der Bus 14 ist als linearer Bus realisiert. Der Bus 14 kann als serieller Bus ausgebildet sein. Der Koordinator 13 kann als Master implementiert sein. Die Teilnehmer 11, 12 können als Slaves realisiert sein. Der Prozessorkern 15, 16, 20 kann jeweils als Mikroprozessor implementiert sein.

Der Prozessorkern 20 des Koordinators 13 ist über eine Signalleitungsschaltung 37 des Koordinators 13 an die erste Signalleitung 17 angeschlossen. Weiter ist der Prozessorkern 15 des ersten Teilnehmers 11 über eine Signalleitungsschaltung 38 des ersten Teilnehmers 11 an die erste und die zweite Signalleitung 17, 18 angeschlossen. Der Prozessorkern 16 des zweiten Teilnehmers 12 ist über eine Signalleitungsschaltung 39 des zweiten Teilnehmers 12 an die zweite und falls vorhanden auch an die dritte Signalleitung 18, 19 angeschlossen.

Darüber hinaus umfasst der Bus 14 mindestens eine Busleitung 21, die den Koordinator 13 mit allen Teilnehmern und somit mit dem ersten und dem zweiten Teilnehmer 11, 12 verbindet. Ein Signal auf der mindestens einen Busleitung 21 erreicht alle Teilnehmer 11, 12. Der Bus 14 kann eine weitere Busleitung 22 umfassen, die den Koordinator 13 mit allen Teilnehmern 11, 12 verbindet. Die mindestens eine Busleitung 21 und die weitere Busleitung 22 können auch als erste und zweite Busleitung bezeichnet werden. Der Koordinator 13 umfasst einen Transceiver 24, der den Prozessorkern 20 mit der ersten und der zweiten Busleitung 21, 22 koppelt. Der erste und der zweite Teilnehmer 11, 12 umfassen ebenfalls jeweils einen Transceiver 25, 26 mit Anschlüssen, die an die erste und die zweite Busleitung 21, 22 angeschlossen sind. Im ersten und zweiten Teilnehmer 11, 12 ist der Transceiver 25, 26 jeweils mit dem Prozessorkern 15, 16 gekoppelt. Die erste und die zweite Busleitung 21, 22 sowie die Transceiver 24 - 26 des Koordinators 13 und der Teilnehmer 11, 12 können gemäß RS 485 Standard implementiert sein. Die Transceiver 24 - 26 des Koordinators 13 und der Teilnehmer 11, 12 können als Sende- und Empfangs-Transceiver ausgelegt und für den Halbduplexbetrieb realisiert sein. Die erste bis zur dritte Signalleitung 17, 18, 19 bilden eine Daisy-Chain. Darüber hinaus ist der Koordinator 13 an alle Teilnehmer 11, 12 direkt über die mindestens eine Busleitung 21 und die weitere Busleitung 22 angeschlossen.

Zusätzlich umfasst der Bus 14 eine Versorgungsleitung 27, die eine Spannungsversorgung 28 des Koordinators 13 mit einer Spannungsversorgung 29 des ersten Teilnehmers 11 und einer Spannungsversorgung 30 des zweiten Teilnehmers 12 verbindet. Die Spannungsversorgung 28, 29, 30 kann jeweils als Spannungsregulator realisiert sein.

Weiter kann der erste und der zweite Teilnehmer 11, 12 jeweils eine Funktionseinheit 35, 36 umfassen. Die Funktionseinheit 35 des ersten Teilnehmers 11 ist mit dem Prozessorkern 15 des ersten Teilnehmers 11 gekoppelt.

Entsprechendes gilt für den zweiten Teilnehmer 12.

Ferner umfasst der Bus 14 eine Bezugspotentialleitung 42, die einen Bezugspotentialanschluss des Koordinators 13 mit Bezugspotentialanschlüssen des ersten und des zweiten Teilnehmers 11, 12 verbindet. Die Versorgungsleitung 27 und die Bezugspotentialleitung 42 dienen der Spannungsversorgung der Teilnehmer 11, 12 durch den Koordinator 13.

Darüber hinaus umfasst der Koordinator 13 einen Speicher 53, der mit dem Prozessorkern 20 oder einem Mikrocontroller 40 des Koordinators 13 verbunden ist. Der Speicher 53 kann als nicht-flüchtiger Speicher realisiert sein. Weiter umfasst der Koordinator 13 einen flüchtigen Speicher 52. Der erste Teilnehmer 11 umfasst einen ersten flüchtigen Speicher 54 und einen ersten nicht-flüchtigen Speicher 55, die an den Transceiver 25 angeschlossen sein können. Der zweite Teilnehmer 12 umfasst einen zweiten flüchtigen Speicher 56 und einen zweiten nicht-flüchtigen Speicher 57, die an den Transceiver 26 angeschlossen sein können. Die flüchtigen Speicher 52, 54, 56 können jeweils als Random Access Memory, abgekürzt RAM, oder Flash-Speicher realisiert sein.

Der erste Teilnehmer 11 umfasst ein Basismodul 31 sowie ein erstes und ein zweites Modul 32, 33. Das Basismodul 31 des ersten Teilnehmers 11 umfasst die für die Kommunikation mit dem Koordinator 13 eingesetzten Schaltungsteile wie etwa den Transceiver 25, die Signalleitungsschaltung 38 und den Prozessorkern 15. Weiter umfasst das Basismodul 31 den ersten flüchtigen Speicher 54 und den ersten nicht-flüchtigen Speicher 55. Zusätzlich kann das Basismodul 31 die Funktionseinheit 35 aufweisen. Weiter kann das Basismodul 31 die Spannungsversorgung 29 umfassen.

Das erste Modul 32 des ersten Teilnehmers 11 umfasst eine weitere Funktionseinheit 34. Die weitere Funktionseinheit 34 ist mit dem Prozessorkern 15 des Basismoduls 31 gekoppelt. Die weitere Funktionseinheit 34 kann mit der Spannungsversorgung 29 des Basismoduls 31 verbunden sein. Das zweite Modul 33 umfasst eine zusätzliche Funktionseinheit 41. Die zusätzliche Funktionseinheit 41 kann an die Spannungsversorgung 29 des Basismoduls 31 angeschlossen sein. Die Verbindungen des Basismoduls 31 mit dem ersten und dem zweiten Modul 32, 33 kann über einen Modulbus 43 oder über Leitungen erfolgen.

In dem in Figur 1 gezeigten Beispiel umfasst der zweite Teilnehmer 12 genau ein Modul, nämlich ein weiteres Basismodul. Der zweite Teilnehmer 12 ist somit nicht modulartig aufgebaut. Der zweite Teilnehmer 12 besteht ausschließlich aus dem weiteren Basismodul. Somit wird bei den Erläuterungen des zweiten Teilnehmers 12 das Basismodul des zweiten Teilnehmers 12 erläutert. Der zweite Teilnehmer 12 ist entsprechend dem Basismodul 31 des ersten Teilnehmers 11 realisiert.

Das Basismodul 31, die Module 32, 33 und der zweite Teilnehmer 12 können jeweils als Messgerät, Sensor oder Aktor realisiert sein. Der Aktor kann als Schaltgerät, Stellgerät, Befehlsgerät, Meldegerät, Bediengerät oder Frequenzumrichter implementiert sein. Die Funktionseinheit 34, 35, 41 des Basismoduls 31 und der zwei Module 32, 33 kann jeweils eine Einheit aus einer Gruppe sein, die eine Aktor-, Schaltgeräts-, Stellgeräts-, Befehlsgeräts-, Meldegeräts-, Bediengeräts-, Frequenzumrichter-, Messgeräts- und Sensor-Einheit umfasst. Die Funktionseinheit 36 des zweiten Teilnehmers 12 kann wie die Funktionseinheit 34, 35, 41 des Basismoduls 31 und des ersten und des zweiten Moduls 32, 33 implementiert sein.

Der Koordinator 13 umfasst eine integrierte Schaltung 45, die als ASIC realisiert sein kann. Die integrierte Schaltung 45 kann die Spannungsversorgung 28, den Transceiver 24, die Signalleitungsschaltung 37, den flüchtigen Speicher 52 und den Prozessorkern 20 umfassen. Weiter umfasst das Basismodul 31 des ersten Teilnehmers 11 eine integrierte Schaltung 46, die als ASIC realisiert sein kann. Die integrierte Schaltung 46 des Basismoduls 31 kann die Spannungsversorgung 29, den Transceiver 25, die Signalleitungsschaltung 38, den ersten flüchtigen Speicher 54, den ersten nicht-flüchtigen Speicher 55 und den Prozessorkern 15 umfassen. Ferner umfasst der zweite Teilnehmer 12 eine integrierte Schaltung 47, die als ASIC realisiert sein kann. Die integrierte Schaltung 47 des zweiten Teilnehmers 12 kann die Spannungsversorgung 30, den Transceiver 26, die Signalleitungsschaltung 39, den zweiten flüchtigen Speicher 56, den zweiten nicht-flüchtigen Speicher 57 und den Prozessorkern 16 aufweisen.

Der Koordinator 13 umfasst einen weiteren Transceiver 58, der einen zweiten Busanschluss 59 des Koordinators 13 mit dem Mikrocontroller 40 des Koordinators 13 koppelt. Weiter umfasst die Busanordnung 10 einen Feldbus 60, der an den zweiten Busanschluss 59 angeschlossen ist. Der Koordinator 13 kann ein Gateway, Router oder Switch sein. Die Busanordnung 10 umfasst eine Steuerung 61, die an den Feldbus 60 angeschlossen ist. Der Koordinator 13 weist einen Oszillator 50 auf. Der Oszillator 50 kann als RC Oszillator ausgebildet sein. Der Oszillator 50 kann zur Zeitsteuerung eingesetzt werden. Der Koordinator 13 kann einen weiteren Speicher 51, der als RAM oder Flash-Speicher realisiert ist, aufweisen.

Der Bus 14 ist als Flachbandkabel oder Rundkabel realisiert. Gemäß Figur 1 kann der Bus 14 z.B. aus fünf Adern bestehen. Alternativ kann der Bus 14 eine andere Anzahl von Adern, z.B. acht Adern, aufweisen.

Der erste Teilnehmer 11 weist eine erste Teilnehmeradresse auf und der zweite Teilnehmer 12 weist eine zweite Teilnehmeradresse auf. Das erste und das zweite Modul 32, 33 weist eine erste und eine zweite Modulnummer auf. Das Basismodul 31 kann eine weitere Modulnummer aufweisen. Die zwei Module 32, 33 werden fortlaufend nummeriert. Die zwei Module tragen somit die Nummern 1 und 2. Das Basismodul 31 kann die Modulnummer 0 aufweisen.

Der erste Teilnehmer 11 hat die erste Anzahl N von Modulen 32, 33. In der in Figur 1 gezeigten Ausführungsform ist die erste Anzahl N gleich 2. Die zweite Teilnehmeradresse wird vom Koordinator 13 gemäß folgender Vorschrift berechnet:

$$\text{zweite Teilnehmeradresse} = \text{erste Teilnehmeradresse} + N + 1$$

In der Ausführungsform gemäß Figur 1 ist somit die zweite Teilnehmeradresse gleich der ersten Teilnehmeradresse plus 3. Da der erste Teilnehmer 11 gemäß Figur 1 über die erste Signalleitung 17 direkt an den Koordinator 13 angeschlossen ist, hat typischerweise der erste Teilnehmer 11 die Zahl 1 als erste Teilnehmeradresse. Der zweite Teilnehmer 12 hat somit als zweite Teilnehmeradresse die Zahl 4.

Die Module 31 bis 33, das heißt das Basismodul 31 und das erste sowie das zweite Modul 32, 33, können über die Teilnehmeradresse und ihre Modulnummer eindeutig adressiert werden. So hat das erste Modul 32 die erste Teilnehmeradresse, nämlich 1, und die erste Modulnummer, nämlich ebenfalls 1 oder alternativ 3.1. Hingegen hat das zweite Modul 33 die erste Teilnehmeradresse, nämlich 1, und die zweite Modulnummer, nämlich 2 oder alternativ 3.2. Das Basismodul 31 kann die erste Teilnehmeradresse, nämlich 1, und eine weitere Modulnummer, nämlich 0 oder alternativ 3.0, aufweisen.

Die Steuerung 61 kann ein Feldbus-Telegramm über den Feldbus 60 und den zweiten Busanschluss 59 an den Koordinator 13 senden. Der Koordinator 13 wandelt das Feldbus-Telegramm in ein Bustelegramm um und gibt dies über den ersten Busanschluss 23 ab. Die Steuerung 61 richtet das Feldbus-Telegramm an eine Slot-Nummer des Koordinators 13. Der Koordinator 13 erkennt die Slot-Nummer und adressiert das Bustelegramm gemäß den im Speicher 53 vorliegenden Informationen. Der Koordinator adressiert in Abhängigkeit von der Slot-Nummer an die Teilnehmeradresse einer der Teilnehmer 11, 12 und, sofern der anzusprechende Teilnehmer ein oder mehr Module aufweist, an die Modulnummer des anzusprechenden Teilnehmers.

Das Basismodul 31 oder eines der Module 32, 33 kann beispielsweise eine Funktionseinheit 34, 35, 41 aufweisen, die einen Sensor umfasst. Die von diesem Sensor gemessenen Daten können beispielsweise der Steuerung 61 übermittelt werden. Dazu werden die Daten von diesem Modul des ersten Teilnehmers 11 dem Koordinator 13 übermittelt. Der Koordinator 13 generiert ein Feldbus-Telegramm an die Steuerung 61, das die vom Modul übermittelten Daten und als Quelle eine Slot-Nummer aufweist. Die Slot-Nummer bildet der Koordinator 13 mit Hilfe der im Speicher 53 gespeicherten Zuordnungstabelle aus der Teilnehmeradresse und der Modulnummer. Somit können einzelne Module eines Teilnehmers und nicht modulartig aufgebaute Teilnehmer Daten über den Koordinator 13 an die Steuerung 61 übermitteln und Daten und/oder Befehle von der Steuerung 61 über den Koordinator 13 erhalten.

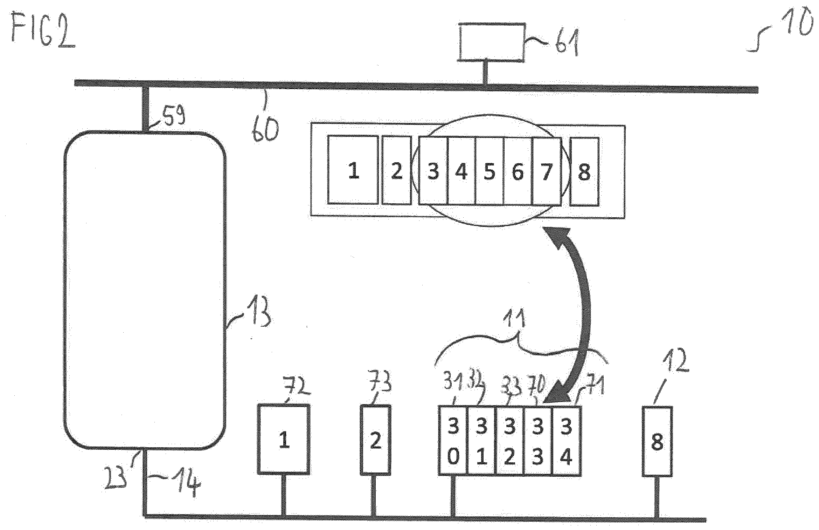

Figur 2 zeigt eine beispielhafte Ausführungsform der Busanordnung 10, die eine Weiterbildung der in Figur 1 gezeigten Ausführungsform ist. Der Feldbus 60 kann z.B. als Profibus DP realisiert sein. In Figur 2 ist exemplarisch das Bussystem 10 und dessen Abbildung in der Steuerungsebene (z.B. Profibus DP 60 auf den Bus 14) dargestellt. Der erste Teilnehmer 11 weist in dieser Ausführungsform das Basismodul 31 und vier Module 32, 33, 70, 71 auf. Die Modulnummern beginnen beispielsweise mit der Zahl 0. Das Basismodul 31 weist typischerweise die Modulnummer 0 auf. Weiter weisen die vier Module 32, 33, 70, 71 weisen die Modulnummern 1, 2, 3 und 4 auf. Zwischen dem Koordinator 13 und dem ersten Teilnehmer 11 können ein weiterer oder mehrere weitere Teilnehmer am Bus 14 angeschlossen sein. Der Koordinator 13 kann z.B. über die erste Signalleitung 17 und einen oder mehrere weitere Teilnehmer sowie eine oder mehrere weitere Signalleitungen mit dem ersten Teilnehmer 11 gekoppelt sein. Beispielsweise sind ein dritter und ein vierter Teilnehmer 72, 73 an den Bus 14 angeschlossen.

Da der Teilnehmer, der am nächsten zum Koordinator 13 am Bus 14 angeschlossen ist, typisch als Teilnehmeradresse die Zahl 1 erhält, weist in Figur 2 der dritte Teilnehmer 72 die Teilnehmeradresse 1, der vierte Teilnehmer 73 die Teilnehmeradresse 2 und der erste Teilnehmer 11 die Teilnehmeradresse 3 auf. Die Teilnehmeradresse des zweiten Teilnehmers 12 berechnet der Koordinator 13 aus der Teilnehmeradresse des ersten Teilnehmers 11 zuzüglich N+1. Da die erste Anzahl N hier den Wert 4 aufweist, ist die zweite Teilnehmeradresse des zweiten Teilnehmers 12 somit 3 + 4 + 1 = 8. Der erste Teilnehmer 11 kann auch als modularer Subbus-Teilnehmer bezeichnet werden. Slot-Nummern im modularen Feldbus-Teilnehmer werden zu Subbus-Teilnehmeradressen und eventuell zu Slot-Nummern eines Subbus-Teilnehmers und umgekehrt. Der Koordinator 13 führt eine Sonderbehandlung durch: Die Feldbus Slots 3 - 7 werden auf Bus-Slots 3.0 - 3.4 abgebildet.

In einer alternativen, nicht gezeigten Ausführungsform kann der Bus 14 weitere Teilnehmer umfassen. Ein weiterer Teilnehmer kann beispielsweise ebenfalls mehr als ein Modul - etwa eine zweite Anzahl M von Modulen - umfassen. Dabei kann die Anzahl der Module der verschiedenen Teilnehmer unterschiedlich sein. Die Anzahl der Module und der Teilnehmer kann durch die Anzahl der zur Verfügung stehenden Slot-Nummern begrenzt sein.

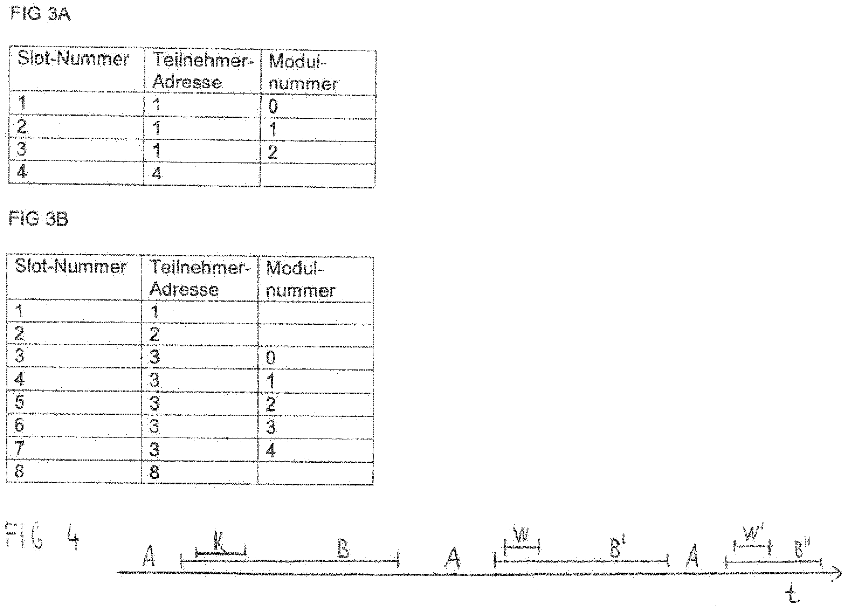

Figur 3A zeigt eine beispielhafte Ausführungsform einer Zuordnungstabelle, die der Koordinator 13 der in Figur 1 gezeigten Busanordnung 10 verwenden kann. Der Koordinator 13 speichert die Zuordnungstabelle im Speicher 53.

Figur 3B zeigt eine beispielhafte Ausführungsform einer Zuordnungstabelle, die der Koordinator 13 der in Figur 2 gezeigten Busanordnung 10 verwendet.

Figur 4 zeigt eine beispielhafte Ausführungsform des zeitlichen Verlaufs der Phasen, die über einer Zeit t aufgetragen sind. Die Konfigurationsphase K wird zu Beginn einer Betriebsphase B durchgeführt. Nach Durchführung der Koordinationsphase K erfolgt in der Betriebsphase B beispielsweise ein regulärer Betrieb der Busanordnung 10. Nach der Betriebsphase B erfolgt eine Ausschaltphase A. In der Ausschaltphase A sind der Koordinator 13 und die Teilnehmer 11, 12 nicht mit elektrischer Energie versorgt. Auf die Ausschaltphase A folgt eine weitere Betriebsphase B'. Zu Beginn der weiteren Betriebsphase B' wird eine Wiederanlaufphase W durchgeführt. Nach der Wiederanlaufphase W erfolgt in der weiteren Betriebsphase B' der reguläre Betrieb der Busanordnung 10. Auf die weitere Betriebsphase B' können weitere Ausschaltphasen A und weitere Betriebsphasen B" folgen. In den Ausschaltphasen A speichern die Teilnehmer 11, 12 keine Teilnehmeradressen. In der Wiederanlaufphase W führt der Koordinator 13 dieselben Schritte durch, um die Teilnehmeradressen den Teilnehmern 11, 12 zuzuordnen wie in der Konfigurationsphase K.

In der Konfigurationsphase K wie auch der Wiederanlaufphase W werden über den Koordinator 13 und mit Hilfe der Daisy-Chain die Teilnehmer 11, 12 beginnend mit dem zum Koordinator 13 am nächsten liegenden Teilnehmer 11 sukzessive adressiert und die geographischen Positionen und damit die Reihenfolge der Teilnehmer 11, 12 festgelegt. In dem in Figur 1 gezeigten Beispiel aktiviert der Koordinator 13 über die erste Signalleitung 17 den ersten Teilnehmer 11. Nach der Aktivierung sendet der Koordinator 13 über die erste und die zweite Busleitung 21, 22 ein Bustelegramm, das eine erste Teilnehmeradresse wie etwa 1 enthält, an alle Teilnehmer 11, 12. Ausschließlich der aktivierte Teilnehmer, nämlich der erste Teilnehmer 11, übernimmt die im Bustelegramm enthaltene erste Teilnehmeradresse in seinen ersten flüchtigen Speicher 54. Die Bustelegramme sind als Broadcast realisiert. Ab diesem Zeitpunkt kann der erste Teilnehmer 11 Bustelegramme mit der zuvor erhaltenen Teilnehmeradresse empfangen. Der erste Teilnehmer 11 kann beispielsweise die erste Anzahl N im ersten flüchtigen oder im ersten nicht-flüchtigen Speicher 54, 55 speichern. Der Koordinator 13 fragt die erste Anzahl N von Modulen beim ersten Teilnehmer 11 ab und speichert die erste Anzahl N im Speicher 53 zusammen mit der ersten Teilnehmeradresse.

In einem weiteren Schritt der Konfigurationsphase K sendet der Koordinator 13 ein Bustelegramm an alle Teilnehmer, das die erste Teilnehmeradresse und den Befehl enthält, die ausgangsseitige Signalleitung, also die zweite Signalleitung 18, zu aktivieren. Der erste Teilnehmer 11 erkennt mittels seines Transceivers 25, dass er angesprochen ist und aktiviert über ein Signal auf der zweiten Signalleitung 18 den zweiten Teilnehmer 12. Anschließend sendet der Koordinator 13 ein Bustelegramm an alle Teilnehmer 11, 12, das die zweite Teilnehmeradresse, z.B. 4, enthält. Da jedoch ausschließlich der zweite Teilnehmer 12 aktiviert ist, übernimmt ausschließlich der zweite Teilnehmer 12 die zweite Teilnehmeradresse in seinen flüchtigen Speicher 56. Als weiterer Schritt in der Konfigurationsphase K veranlasst der Koordinator 13 den zweiten Teilnehmer 12, die zweite Anzahl M von Modulen zu melden. Der zweite Teilnehmer 12 besteht z.B. ausschließlich aus einem Basismodul und antwortet mit der Angabe, dass die zweite Anzahl M den Wert 0 aufweist. Der Koordinator 13 registriert die zweite Anzahl M zusammen mit der zweiten Teilnehmeradresse im Speicher 53. Die Adressierung führt der Koordinator 13 durch, bis alle Teilnehmer eine Teilnehmeradresse zugewiesen bekommen haben. Nach Abschluss der Konfigurationsphase K ist der Koordinator 13 so konfiguriert, dass er alle Teilnehmer 11, 12 über die Teilnehmeradressen und Modulnummern adressieren kann.

Ein Bediener kann auch beispielsweise mittels eines Schalters des Koordinators 13 die Busanordnung 10 zurücksetzen, sodass die Busanordnung 10 wieder mit einer Betriebsphase B, die eine Konfigurationsphase K aufweist, startet.

Bezugszeichenliste

| 10 | Busanordnung |
| 11 | erster Teilnehmer |
| 12 | zweiter Teilnehmer |
| 13 | Koordinator |
| 14 | Bus |
| 15, 16 | Prozessorkern |
| 17 | erste Signalleitung |
| 18 | zweite Signalleitung |
| 19 | dritte Signalleitung |
| 20 | Prozessorkern |
| 21 | mindestens eine Busleitung |
| 22 | weitere Busleitung |
| 23 | erster Busanschluss |

| | |
|---|---|
| 24, 25, 26 | Transceiver |
| 27 | Versorgungsleitung |
| 28, 29, 30 | Spannungsversorgung |
| 31 | Basismodul |
| 32, 33 | Modul |
| 34, 35, 36 | Funktionseinheit |
| 37, 38, 39 | Signalleitungsschaltung |
| 40 | Mikrocontroller |
| 41 | zusätzliche Funktionseinheit |
| 42 | Bezugspotentialleitung |
| 43 | Modulbus |
| 45, 46, 47 | integrierte Schaltung |
| 50 | Oszillator |
| 51 | weiterer Speicher |
| 52 | flüchtiger Speicher |
| 53 | Speicher |
| 54 | erster flüchtiger Speicher |
| 55 | erster nicht-flüchtiger Speicher |
| 56 | zweiter flüchtiger Speicher |
| 57 | zweiter nicht-flüchtiger Speicher |
| 58 | weiterer Transceiver |
| 59 | zweiter Busanschluss |
| 60 | Feldbus |
| 61 | Steuerung |
| 70, 71 | Modul |
| 72 | dritter Teilnehmer |
| 73 | vierter Teilnehmer |
| A | Ausschaltphase |
| B, B', B" | Betriebsphase |
| K | Konfigurationsphase |
| t | Zeit |
| W, W' | Wiederanlaufphase |

## Patentansprüche

1.  Busanordnung, umfassend

    - einen ersten Teilnehmer (11),
    - einen zweiten Teilnehmer (12),
    - einen Koordinator (13), der einen ersten und einen zweiten Busanschluss (23, 59) umfasst, und
    - einen Bus (14), der den ersten Busanschluss (23) mit dem ersten und dem zweiten Teilnehmer (11, 12) koppelt,

    **dadurch gekennzeichnet,**
    **dass** der erste Teilnehmer (11) ein Basismodul (31) und eine erste Anzahl N von Modulen (32, 33) umfasst, wobei der Koordinator (13) ausgelegt ist, in einem Konfigurationsmodus (K) dem ersten Teilnehmer (11) ein Bustelegramm zum Abfragen von Informationen zu senden, und der erste Teilnehmer (11) ausgelegt ist, die erste Anzahl N dem Koordinator (13) zu übermitteln, und wobei der Koordinator (13) ausgelegt ist, ein Feldbus-Telegramm über den zweiten Busanschluss (59) zu empfangen und in ein an das Basismodul (31) oder ein Modul aus der ersten Anzahl N von Modulen (32, 33) gerichtetes Bustelegramm umzuwandeln und über den ersten Busanschluss (23) zu senden.

2.  Busanordnung nach Anspruch 1, wobei der erste Teilnehmer (11) eine erste Teilnehmeradresse, die erste Anzahl N von Modulen (32, 33) eine erste Anzahl N von Modulnummern, das Basismodul (31) eine weitere Modulnummer und der zweite Teilnehmer (12) eine zweite Teilnehmeradresse aufweist sowie der Koordinator (13) einen Speicher (53) umfasst und ausgelegt ist, aus dem Feldbus-Telegramm eine Slot-Nummer zu identifizieren, unter Verwendung der Slot-Nummer und der im Speicher (53) gespeicherten Informationen die erste Teilnehmeradresse und die Modulnummer zu ermitteln sowie das Bustelegramm an die erste Teilnehmeradresse und die Modulnummer zu richten.

3. Busanordnung nach Anspruch 2,
wobei der Koordinator (13) ausgelegt ist, ein Feldbus-Telegramm über den zweiten Busanschluss (59) abzugeben, welches eine Slot-Nummer und von einem Modul (32, 33) oder dem Basismodul (31) bereitgestellte Daten umfasst, und die im Feldbus-Telegramm angegebene Slot-Nummer unter Verwendung der im Speicher (53) gespeicherten Informationen, der ersten Teilnehmeradresse sowie der Modulnummer zu ermitteln.

4. Busanordnung nach einem der Ansprüche 1 bis 3,
wobei das Basismodul (31) eine konfigurierbare Funktionseinheit (35) umfasst und ein Modul der ersten Anzahl von Modulen (32, 33) jeweils eine konfigurierbare Funktionseinheit (34, 41) umfasst.

5. Busanordnung nach einem der Ansprüche 1 bis 4,
wobei das Basismodul (31) und ein Modul der ersten Anzahl von Modulen (32, 33) jeweils eine Funktionseinheit (34, 35, 41) aus einer Gruppe umfasst, die eine Aktor-, Schaltgeräts-, Stellgeräts-, Befehlsgeräts-, Meldegeräts-, Bediengeräts-, Frequenzumrichter-, Messgeräts- und Sensor-Einheit umfasst.

6. Busanordnung nach einem der Ansprüche 1 bis 5,
wobei der Bus (14) eine erste Signalleitung (17), die den ersten Teilnehmer (11) und den ersten Busanschluss (23) des Koordinators (13) koppelt, und mindestens eine Busleitung (21) umfasst, die den ersten Busanschluss (23) des Koordinators (13) mit dem ersten und dem zweiten Teilnehmer (11, 12) verbindet,
wobei der Koordinator (13) ausgelegt ist, in einer Konfigurationsphase (K) über die erste Signalleitung (17) den ersten Teilnehmer (11) zu aktivieren und über die mindestens eine Busleitung (21) ein Bustelegramm, das eine erste Teilnehmeradresse enthält, abzusenden, und
der erste Teilnehmer (11) ausgelegt ist, die erste Teilnehmeradresse in einem ersten flüchtigen Speicher (54) des ersten Teilnehmers (11) zu speichern.

7. Busanordnung nach einem der Ansprüche 1 bis 6,
wobei der Koordinator (13) ausgelegt ist, in einer Konfigurationsphase (K) dem ersten Teilnehmer (11) eine erste Teilnehmeradresse und dem zweiten Teilnehmer (12) eine zweite Teilnehmeradresse mitzuteilen und die zweite Teilnehmeradresse gemäß folgender Vorschrift zu bestimmen:

$$\text{zweite Teilnehmeradresse} > \text{erste Teilnehmeradresse} + N \, ,$$

wobei N die erste Anzahl der Module (32, 33) ist.

8. Busanordnung nach Anspruch 6 und 7,
wobei der Bus (14) eine zweite Signalleitung (18) umfasst, die den zweiten Teilnehmer (12) an den ersten Teilnehmer (11) anschließt, und
wobei der erste Teilnehmer (11) ausgelegt ist, in der Konfigurationsphase (K) über die zweite Signalleitung (18) den zweiten Teilnehmer (12) zu aktivieren,
der Koordinator (13) ausgelegt ist, über die mindestens eine Busleitung (21) ein Bustelegramm, das die zweite Teilnehmeradresse enthält, an den ersten und den zweiten Teilnehmer (11, 12) abzusenden, und
der zweite Teilnehmer (12) ausgelegt ist, die zweite Teilnehmeradresse in einem zweiten flüchtigen Speicher (56) des zweiten Teilnehmers (12) zu speichern.

9. Verfahren zum Betreiben einer Busanordnung, umfassend folgende Schritte:

- Empfangen eines Feldbus-Telegramm durch einen Koordinator (13) über einen zweiten Busanschluss (59) der Koordinators (13) und
- Umwandeln des Feldbus-Telegramms in ein Bustelegramm durch den Koordinator (13) und senden über einen ersten Busanschluss (23) des Koordinators (13), wobei ein Bus (14) den ersten Busanschluss (23) mit einem ersten und einem zweiten Teilnehmer (11, 12) koppelt,

**dadurch gekennzeichnet,**

**dass** der erste Teilnehmer (11) ein Basismodul (31) und eine erste Anzahl N von Modulen (32, 33) umfasst und der Koordinator (13) das Bustelegramm an das Basismodul (31) oder ein Modul aus der ersten Anzahl N von Modulen (32, 33) richtet,

wobei der Koordinator (13) in einem Konfigurationsmodus dem ersten Teilnehmer (11) ein Bustelegramm zum Abfragen von Informationen sendet und der erste Teilnehmer (11) die erste Anzahl N dem Koordinator (13) übermittelt.

**Claims**

1. Bus arrangement, comprising

   - a first subscriber (11),
   - a second subscriber (12),
   - a coordinator (13) which comprises a first and a second bus terminal (23, 59), and
   - a bus (14) which couples the first bus terminal (23) with the first and second subscriber (11, 12),

   **characterised in**
   **that** the first subscriber (11) comprises a basis module (31) and a first number N of modules (32, 33),
   wherein the coordinator (13) is configured to send, in a first configuration mode (K), to the first subscriber (11) a bus telegram for retrieving information, and the first subscriber (11) is configured to transmit the first number N to the coordinator (13), and
   wherein the coordinator (13) is configured to receive a fieldbus telegram via the second bus terminal (59) and to transform it into a bus telegram directed to the basis module (31) or a module from the first number N of modules (32, 33) and to send it via the first bus terminal (23).

2. Bus arrangement according to claim 1,
   wherein the first subscriber (11) has a first subscriber address, the first number N of modules (32, 33) has a first number N of module numbers, the basis module (31) has a further module number and the second subscriber (12) has a second subscriber address and
   the coordinator (13) includes a storage device (53) and is configured to identify out of the fieldbus telegram a slot number, to determine the first subscriber address and the module number by using the slot number and the information stored in the storage device (53), and to direct the bus telegram to the first subscriber address and the module number.

3. Bus arrangement according to claim 2,
   wherein the coordinator (13) is configured to submit via the second bus terminal (59) a fieldbus telegram which comprises a slot number and data provided by a module (32, 33) or the basis module (31), and to determine the slot number given in the fieldbus telegram by using the information stored in the storage device (53), the first subscriber address and the module number.

4. Bus arrangement according to any of claims 1 to 3,
   wherein the basis module (31) comprises a configurable function unit (35) and a module of the first number of modules (32, 33) comprises respectively one configurable function unit (34, 41).

5. Bus arrangement according to any of claims 1 to 4,
   wherein the basis module (31) and a module of the first number of modules (32, 33) comprises respectively one function unit (34, 35, 41) from a group which comprises an actuator unit, switching device unit, positioning device unit, command device unit, signalling device unit, operating device unit, frequency converter unit, measuring device unit and sensory unit.

6. Bus arrangement according to any of claims 1 to 5,
   wherein the bus (14) comprises a first signal line (17), which couples the first subscriber (11) and the first bus terminal (23) of the coordinator (13), and at least one bus line (21) which connects the first bus terminal (23) of the coordinator (13) with the first and the second subscriber (11, 12),
   wherein the coordinator (13) is configured to activate, in a configuration phase (K), the first subscriber (11) via the first signal line (17) and via the at least one bus line (21) to send a bus telegram which contains a first subscriber address, and
   the first subscriber (11) is configured to store the first subscriber address in a first volatile storage device (54) of the first subscriber (11).

7. Bus arrangement according to any of claims 1 to 6,
wherein the coordinator (13) is configured to communicate, in a configuration phase (K), to the first subscriber (11) a first subscriber address and to the second subscriber (12) a second subscriber address and to determine the second subscriber address according to the following rule:

$$\text{second subscriber address} > \text{first subscriber address} + N$$

wherein N is the first number of the modules (32, 33).

8. Bus arrangement according to claims 6 and 7,
wherein the bus (14) includes a second signal line (18) which connects the second subscriber (12) to the first subscriber (11), and wherein the first subscriber (11) is configured to activate, in the configuration phase (K), the second subscriber (12) via the second signal line (18),
the coordinator (13) is configured to send, via the at least one bus line (21), a bus telegram, which contains the second subscriber address, to the first and the second subscriber (11, 12), and
the second subscriber (12) is configured to store the second subscriber address in a second volatile storage device (56) of the second subscriber (12).

9. Method for operating a bus arrangement, comprising the following steps:

- receiving a fieldbus telegram on the part of a coordinator (13) via a second bus terminal (59) of the coordinator (13) and
- transforming the fieldbus telegram into a bus telegram on the part of the coordinator (13) and sending it via a first bus terminal (23) of the coordinator (13),

wherein a bus (14) couples the first bus terminal (23) with a first and a second subscriber (11, 12),
**characterised in**
**that** the first subscriber (11) comprises a basis module (31) and a first number N of modules (32, 33) and the coordinator (13) directs the bus telegram to the basis module (31) or a module from the first number N of modules (32, 33),
wherein the coordinator (13) in a configuration mode sends to the first subscriber (11) a bus telegram for retrieving information and the first subscriber (11) transmits the first number N to the coordinator (13).

**Revendications**

1. Système de bus, comportant

- un premier abonné (11),
- un second abonné (12),
- un coordinateur (13), qui comporte un premier et un second branchement de bus (23, 59), et
- un bus (14), qui couple le premier branchement de bus (23) au premier et au second abonné (11, 12),

**caractérisé**
**en ce que** le premier abonné (11) comporte un module de base (31) et un premier nombre N de modules (32, 33), dans lequel le coordinateur (13) est conçu pour envoyer, dans un mode de configuration (K), au premier abonné (11) un télégramme de bus pour interroger des informations, et le premier abonné (11) est conçu pour communiquer le premier nombre N au coordinateur (13), et
dans lequel le coordinateur (13) est conçu pour recevoir un télégramme de bus de terrain par le biais du second branchement de bus (59) et pour le convertir en un télégramme de bus adressé au module de base (31) ou à un module parmi le premier nombre N de modules (32, 33) et pour l'envoyer par le biais du premier branchement de bus (23).

2. Système de bus selon la revendication 1,

dans lequel le premier abonné (11) comprend une première adresse d'abonné, le premier nombre N de modules (32, 33) comprend un premier nombre N de numéros de modules, le module de base (31) comprend un autre numéro de module et le second abonné (12) comprend une seconde adresse d'abonné ainsi que le coordinateur (13) comporte une mémoire (53) et est conçu pour identifier à partir du télégramme de bus de terrain un numéro d'emplacement, pour déterminer à l'aide du numéro d'emplacement et des informations stockées dans la mémoire (53) la première adresse d'abonné et le numéro de module ainsi que pour adresser le télégramme de bus à la première adresse d'abonné et au numéro de module.

3. Système de bus selon la revendication 2,
dans lequel le coordinateur (13) est conçu pour délivrer par le biais du second branchement de bus (59) un télégramme de bus de terrain, qui comporte un numéro d'emplacement et des données préparées par un module (32, 33) ou par le module de base (31), et pour déterminer le numéro d'emplacement indiqué dans le télégramme de bus de terrain à l'aide des informations stockées dans la mémoire (53), de la première adresse d'abonné ainsi que du numéro de module.

4. Système de bus selon l'une quelconque des revendications 1 à 3,
dans lequel le module de base (31) comporte une unité fonctionnelle (35) configurable et chaque module du premier nombre de modules (32, 33) comporte une unité fonctionnelle (34, 41) configurable.

5. Système de bus selon l'une quelconque des revendications 1 à 4,
dans lequel le module de base (31) et chaque module du premier nombre de modules (32, 33) comportent une unité fonctionnelle (34, 35, 41) parmi un groupe qui comporte une unité d'actionneur, une unité d'appareil de commutation, une unité d'appareil de réglage, une unité d'appareil de commande, une unité d'appareil d'annonce, une unité d'appareil de service, une unité de convertisseur de fréquence, une unité d'appareil de mesure et une unité de capteur.

6. Système de bus selon l'une quelconque des revendications 1 à 5,
dans lequel le bus (14) comporte une première ligne de signaux (17), qui couple le premier abonné (11) et le premier branchement de bus (23) du coordinateur (13), et au moins une ligne de bus (21) qui relie le premier branchement de bus (23) du coordinateur (13) au premier et au second abonné (11, 12),
dans lequel le coordinateur (13) est conçu pour activer, dans une phase de configuration (K) par le biais de la première ligne de signaux (17), le premier abonné (11) et pour envoyer, par le biais de l'au moins une ligne de bus (21), un télégramme de bus qui contient une première adresse d'abonné, et
le premier abonné (11) est conçu pour stocker la première adresse d'abonné dans une première mémoire volatile (54) du premier abonné (11).

7. Système de bus selon l'une quelconque des revendications 1 à 6,
dans lequel le coordinateur (13) est conçu pour annoncer, dans une phase de configuration (K), au premier abonné (11) une première adresse d'abonné et au second abonné (12) une seconde adresse d'abonné et d'établir la seconde adresse d'abonné selon la directe suivante :

$$\text{seconde adresse d'abonné} > \text{première adresse d'abonné} + N,$$

dans lequel N est le premier nombre des modules (32, 33).

8. Système de bus selon la revendication 6 et 7,
dans lequel le bus (14) comporte une seconde ligne de signaux (18) qui connecte le second abonné (12) au premier abonné (11), et
dans lequel le premier abonné (11) est conçu pour activer le second abonné (12) dans la phase de configuration (K) par le biais de la seconde ligne de signaux (18), le coordinateur (13) est conçu pour envoyer, par le biais de l'au moins une ligne de bus (21), un télégramme de bus, qui contient la seconde adresse d'abonné, au premier et au second abonné (11, 12), et
le second abonné (12) est conçu pour stocker la seconde adresse d'abonné dans une seconde mémoire volatile (56) du second abonné (12).

9. Procédé de fonctionnement d'un système de bus, comportant des étapes suivantes :

- la réception d'un télégramme de bus de terrain par un coordinateur (13) par le biais d'un second branchement de bus (59) du coordinateur (13) et
- la conversion du télégramme de bus de terrain en un télégramme de bus par le coordinateur (13) et l'envoi par le biais d'un premier branchement de bus (23) du coordinateur (13), dans lequel un bus (14) couple le premier branchement de bus (23) à un premier et à un second abonné (11, 12),

**caractérisé**
**en ce que** le premier abonné (11) comporte un module de base (31) et un premier nombre N de modules (32, 33) et le coordinateur (13) adresse le télégramme de bus au module de base (31) ou à un module parmi le premier nombre N de modules (32, 33),
dans lequel le coordinateur (13) envoie dans un mode de configuration au premier abonné (11) un télégramme de bus pour l'interrogation d'informations et le premier abonné (11) communique le premier nombre N au coordinateur (13).

FIG 1

FIG2

EP 3 387 797 B1

FIG 3A

| Slot-Nummer | Teilnehmer-Adresse | Modul-nummer |
|---|---|---|
| 1 | 1 | 0 |
| 2 | 1 | 1 |
| 3 | 1 | 2 |
| 4 | 4 | |

FIG 3B

| Slot-Nummer | Teilnehmer-Adresse | Modul-nummer |
|---|---|---|
| 1 | 1 | |
| 2 | 2 | |
| 3 | 3 | 0 |
| 4 | 3 | 1 |
| 5 | 3 | 2 |
| 6 | 3 | 3 |
| 7 | 3 | 4 |
| 8 | 8 | |

FIG 4

EP 3 387 797 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20150169493 A1